# EUROPÄISCHE PATENTSCHRIFT

(11) **EP 2 496 852 B1**
(45) Veröffentlichungstag und Bekanntmachung des Hinweises auf die Patenterteilung: **27.05.2015**
(21) Anmeldenummer: 10755168.1
(22) Anmeldetag: 20.09.2010
(51) Int. Cl.: F16C 23/10, F16C 33/04, H02K 7/116

(54) **BUCHSE FÜR EINE ANTRIEBSEINHEIT, SOWIE ANTRIEBSEINHEIT**
BUSHING FOR A DRIVE UNIT AND DRIVE UNIT
DOUILLE POUR UNE UNITÉ D'ENTRAÎNEMENT ET UNITÉ D'ENTRAÎNEMENT

(30) Priorität: 06.11.2009 DE 102009046447
(43) Veröffentlichungstag der Anmeldung: 12.09.2012
(73) Patentinhaber: Robert Bosch GmbH, 70442 Stuttgart (DE)
(72) Erfinder: PETRY, Markus, 77815 Buehl (DE); WEGNER, Norbert, 77815 Buehl (DE); SEILER, Ottmar, 77833 Ottersweier-Unzhurst (DE); KASTINGER, Guenter, 76571 Gaggenau-Sulzbach (DE); DUDEK, Alexander, 77656 Offenburg (DE)
(86) Internationale Anmeldenummer: PCT/EP2010/063798
(87) Internationale Veröffentlichungsnummer: WO 2011/054580

(56) Entgegenhaltungen:
- WO-A1-97/11285
- DE-A1- 10 313 734
- FR-A1- 2 278 985
- FR-A1- 2 315 633
- FR-A1- 2 748 074
- US-B1- 6 177 742

## Beschreibung

Die Erfindung betrifft eine Buchse für eine Antriebseinheit, insbesondere eine Exzenterbuchse für einen Wischerantrieb eines Scheibenwischers. Ferner betrifft die Erfindung eine Antriebseinheit, insbesondere einen Wischerantrieb für einen Scheibenwischer eines Kraftfahrzeugs.

### Stand der Technik

Die US 6 177 742 B1 bzw. DE 198 210 79 A1 lehrt eine elektrische Antriebseinheit für Scheibenwischer eines Kraftfahrzeugs. Die Antriebseinheit umfasst einen Antriebsmotor mit einem Polgehäuse, ein stirnseitig am Polgehäuse befestigtes Getriebegehäuse zur Aufnahme eines auf einer Abtriebswelle vorgesehenen Schneckenrads, das in eine mit einer Ankerwelle des Antriebsmotors verbundene Schnecke eingreift. Die Abtriebswelle ist in einer Exzenterbuchse gelagert, welche zum Einstellen eines Achsabstands zwischen der Ankerwelle und der Abtriebswelle verdrehbar und im verdrehten Zustand verdrehsicher im Getriebegehäuse montierbar ist. Eine Außenfläche der Exzenterbuchse ist derart gestuft ausgebildet ist, dass sie an ihrer einem Flansch der Exzenterbuchse zugewandten Seite einen größeren Durchmesser besitzt als an ihrer dem Flansch abgewandten Seite.

Die WO 97/11285 A1 offenbart ein als eine monolithische Buchse ausgebildetes Radialaxiallager mit einem sich in Axialrichtung erstreckenden Buchsenkörper und eine davon in Radialrichtung abstehende Schulter, wobei das Radialaxiallager mit dem Buchsenkörper und dem Flanschabschnitt in/an einem Bauteil montierbar ist. Das Radialaxiallager umfasst am Buchsenkörper eine Vielzahl von sich in Axialrichtung erstreckende Rippen, wobei zwei in Umfangsrichtung direkt zueinander benachbarte Rippen jeweils eine an einer Stirnseite offene kanälförmige Wanne konstituieren.

Die DE 103 13 734 A1 offenbart eine elektrische Antriebseinheit für einen Scheibenwischer eines Kraftfahrzeugs, mit einem Elektromotor, der über eine Antriebswelle mit Schnecke ein Schneckenrad eines Getriebes antreibt. Das Schneckenrad ist in einer Exzenterbuchse gelagert, die ihrerseits in einer gestuften Montagebohrung eines Getriebegehäuses sitzt. Korrespondierend zur gestuften Montagebohrung im Gehäuse weist die Exzenterbuchse neben einem Flanschabschnitt einen entsprechend gestuften Montageabschnitt auf, der einen ersten Pressbereich benachbart zum Flanschabschnitt, einen Zwischenbereich und am freien Längsendabschnitt einen zweiten Pressbereich aufweist. Für die Montage der Exzenterbuchse werden die beiden Pressbereiche in korrespondierende Pressbereiche der gestuften Montagebohrung eingepresst, wobei ein Bund des Flanschabschnitts der Exzenterbuchse an einem Rand der Montagebohrung flächig zur Anlage kommt.

Die Anwendung einer Exzenterbuchse ist deswegen notwendig, weil ein Abstand zwischen der Antriebswelle und dem Schneckenrad genau eingestellt werden muss, um einerseits hohe Drehmomente sicher und dauerhaft übertragen zu können, und andererseits, um die Anforderungen an Geräuschemissionen erfüllen zu können. Problematisch bei der Montage der Exzenterbuchse ist, dass der Zwischenbereich derart ausgebildet ist, dass dieser im eingebauten Zustand kontaktfrei zur Montagebohrung angeordnet ist, mithin also ein Luftvolumen in der Montagebohrung zwischen den beiden Pressbereichen eingeschlossen wird. Beim Montageprozess kann es zu einem schnellen Komprimiervorgang dieses Luftvolumens kommen, welche eine Kraft entgegen der Montagerichtung der Exzenterbuchse erzeugt. Diese Gegenkraft kann so groß werden, dass die Exzenterbuchse nicht mehr korrekt montiert werden kann. Ferner ist es bei montierter Exzenterbuchse problematisch, dass zwischen dem Bund des Flanschabschnitts und dessen flächiger Anlage auf dem Getriebegehäuse, Wasser durch dazwischen gebildete Kapillare nach innen in das Gehäuse gelangen kann.

### Aufgabenstellung

Es ist eine Aufgabe der Erfindung, eine verbesserte Buchse, insbesondere eine verbesserte Exzenterbuchse, sowie einen verbesserten Antrieb, insbesondere einen verbesserten Wischerantrieb für einen Scheibenwischer zur Verfügung zu stellen. Hierbei soll eine Montage der Buchse schnell und zuverlässig erfolgen können. Darüber hinaus soll die Buche im montierten Zustand nicht die Möglichkeit bieten, dass Wasser in einen Montagebereich der Buchse gelangen kann.

### Offenbarung der Erfindung

Die Aufgabe der Erfindung wird mittels einer Buchse für eine Antriebseinheit, insbesondere eine Exzenterbuchse für einen Wischerantrieb eines Scheibenwischers, gemäß Anspruch 1; und eine Antriebseinheit, insbesondere einen Wischerantrieb für einen Scheibenwischer eines Kraftfahrzeugs, gemäß Anspruch 10 gelöst. Vorteilhafte Weiterbildungen der Erfindung ergeben sich aus den abhängigen Ansprüchen.

Die erfindungsgemäße Buchse weist einen Montageabschnitt und einen davon hervor ragenden Flanschabschnitt auf, wobei die Buchse mittels des Montageabschnitts und des Flanschabschnitts in/an einem Bauteil montierbar ist. Die Buchse weist dabei einen Entlastungskanal derart auf, dass ein Fluid bei einer Montage der Buchse im/am Bauteil und/oder in einem Montagezustand am/im Bauteil durch den Entlastungskanal hindurch strömbar ist. Ein-solches Bauteil kann z. B. ein Gehäuse eines Antriebs oder einer Antriebseinheit, insbesondere einer elektrischen Antriebseinheit für einen Scheibenwischer, bevorzugt ein Getriebegehäuse sein. Gemäß der Erfindung ist der Entlastungskanal in einem dem Montageabschnitt zugewandten Bund des Flanschabschnitts vorgesehen, und im Bund oder im an den Bund angrenzenden Montageabschnitt ist ein Ringkanal vorgesehen, der mit dem Entlastungskanal in einer Fluidverbindung steht.

In Ausführungsformen der Erfindung kann ferner ein Entlastungskanal in einer Außenseite des Montageabschnitts vorgesehen sein. Hierbei kann der Montageabschnitt benachbart zum Flanschabschnitt einen Pressbereich besitzen, wobei im Pressbereich der Entlastungskanal vorgesehen ist, welcher sich über die gesamte Länge des Pressbereichs hinweg erstreckt. Der Entlastungskanal des Flanschabschnitts der Buchse kann dabei ein im Wesentlichen radialer Kapillare-Entlastungskanal sein, durch welchen im Montagezustand der Buchse in einer Montagebohrung des Bauteils, eine Kapillare zwischen dem Bund der Buchse und dem Bauteil entwässerbar ist. Ferner kann der Entlastungskanal des Montageabschnitts ein im Wesentlichen geradliniger Druckentlastungskanal sein, der bei der Montage der Buchse in der Montagebohrung des Bauteils einen Raum zwischen der Buchse und dem Bauteil entlüftet.

Durch den erfindungsgemäßen Entlastungskanal ist es möglich, eine oder eine Mehrzahl von Kapillaren, die zwischen dem Bauteil und dem flächig anliegenden Bund der Buchse entstehen können, zu entwässern, sodass kein Wasser nach innen über die Montagebohrung, in das Bauteil gelangen kann. Ferner ergeben sich durch den Entlastungskanal des Montageabschnitts keine stark verdichteten Luftvolumina mehr, welche einem Einpressvorgang der Buchse in die Montagebohrung entgegenwirken können. Des Weiteren kann ein zwischen der Buchse und dem Bauteil eingeschlossenes Luftvolumen infolge von Temperaturveränderungen keinen Über- bzw. Unterdruck mehr aufbauen, wodurch das Einsaugen von Wasser sicher verhindert ist und Veränderungen von Ölverteilungen vermieden werden. Insgesamt ergibt sich ein sicherer und robusterer Einpressvorgang der Buchse in das Bauteil, wobei die Buchse im eingepressten Zustand ein verbessertes Verhalten zeigt.

In Ausführungsformen der Erfindung ist durch den Entlastungskanal bei und/oder nach der Montage der Buchse im Bauteil eine Fluidverbindung zwischen zwei Räumen herstellbar. Der erste Raum befindet sich dabei zwischen der Buchse und dem Bauteil, wobei dieser Raum bevorzugt von der Montagebohrung für die Buchse, oder einer Anlagefläche des Bauteils für den Bund des Flanschabschnitts der Buchse, und der Buchse selbst gebildet ist. Der zweite Raum grenzt entweder an eine Innenseite des Bauteils oder an dessen Außenseite, insbesondere eine Umgebung, also die Umwelt, an. Der Entlastungskanal des Montageabschnitts kann in einem Anlagebereich, insbesondere dem Pressbereich, des Montageabschnitts mit dem Bauteil vorgesehen sein, wobei der Entlastungskanal bevorzugt im Wesentlichen parallel zur Längsrichtung des Montageabschnitts verläuft. Bevorzugt ist der jeweilige Entlastungskanal eine aus dem Material der Buchse herausgearbeitete Nut oder eine in das Material der Buchse eingebrachte Vertiefung.

Ferner kann der Montageabschnitt in Ausführungsformen der Erfindung benachbart zum Flanschabschnitt einen ersten Pressbereich und an seinem freien Längsendabschnitt einen zweiten Pressbereich besitzen, der einen geringeren Durchmesser als der erste Pressbereich aufweist, wobei der zweite Pressbereich den Entlastungskanal aufweist, der sich bevorzugt über die gesamte Länge des zweiten Pressbereichs hinweg erstreckt. Hierbei verläuft der Entlastungskanal von einem freien Längsende des zweiten Pressbereichs bis in einen Zwischenbereich des Montageabschnitts hinein, der zwischen dem ersten und dem zweiten Pressbereich ausgebildet ist. Bevorzugt sind im zweiten Pressbereich drei Entlastungskanäle vorgesehen, wohingegen der Bund bevorzugt sechs Entlastungskanäle aufweist.

### Kurzbeschreibung der Figuren

Die Erfindung wird im Folgenden anhand von Ausführungsbeispielen unter Bezugnahme auf die beigefügte Zeichnung näher erläutert. In der Zeichnung zeigen:
- Fig. 1: eine teilweise geschnittene zweidimensionale Draufsicht auf eine erfindungsgemäße Antriebseinheit;
- Fig. 2: eine geschnittene zweidimensionale Seitenansicht durch ein Getriebegehäuse der Antriebseinheit, mit einer nicht gestuften Montagebohrung, entlang einer in Fig. 1 eingezeichneten strichpunktierten Linie;
- Fig. 3: eine zur Fig. 2 analoge, um 180° gedrehte Ansicht eines alternativen Getriebegehäuses mit einer gestuften Montagebohrung für eine erfindungsgemäße Buchse; und
- Fig. 4: eine Exzenterbuchse gemäß dem Stand der Technik in einer Montageposition in/an einem Bauteil;
- Fig. 5: eine perspektivische Ansicht einer ersten Ausführungsform einer erfindungsgemäßen Buchse;
- Fig. 6: eine Draufsicht auf die erfindungsgemäße Buchse aus Fig. 5.

### Ausführungsformen der Erfindung

Die Erfindung wird im Folgenden anhand einer Exzenterbuchse näher erläutert, wobei die Exzenterbuchse einen Flansch- und einem Montageabschnitt besitzt und für Antriebe von Scheibenwischern eingesetzt wird. Die Erfindung ist jedoch nicht auf solche Exzenterbuchsen beschränkt, sondern kann einerseits auch auf zentrische Buchsen und auch auf einem anderen Gebiet eingesetzt werden.

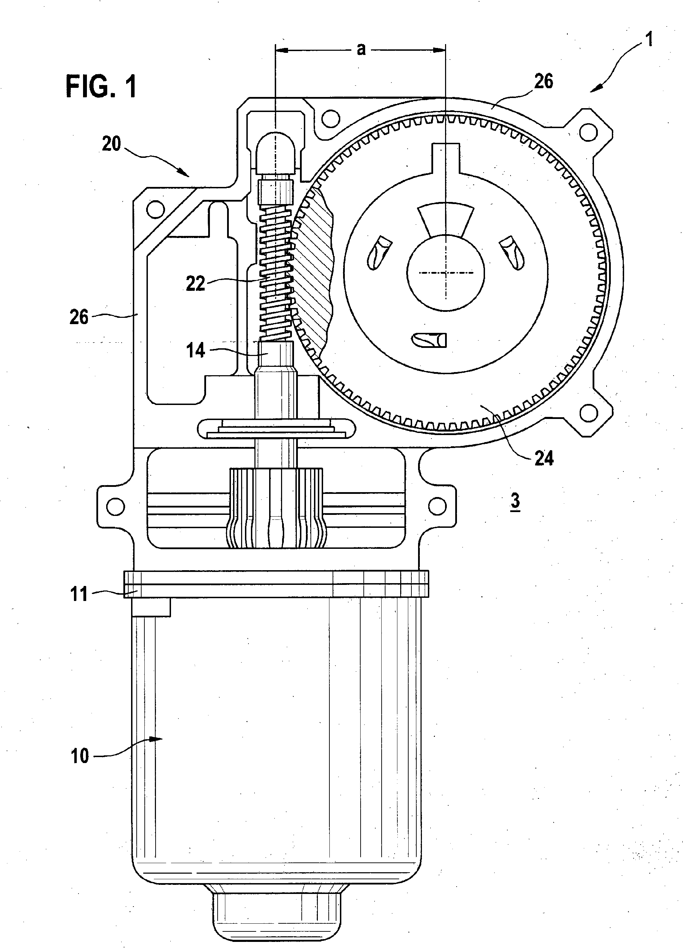

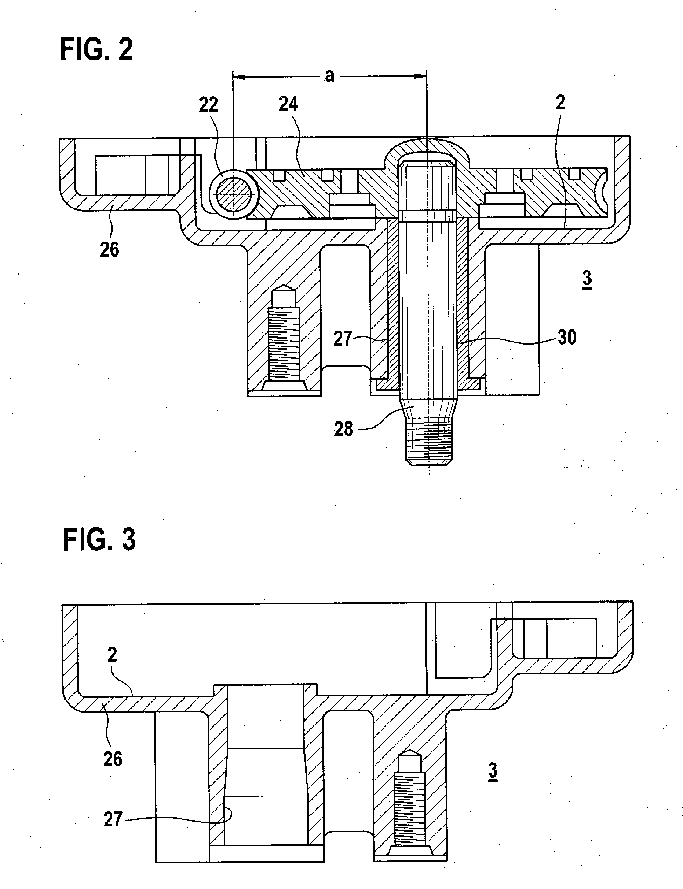

Die in den Fig. 1 bis 3 dargestellte elektrische Antriebseinheit 1 für einen Scheibenwischer eines Kraftfahrzeugs umfasst einen Elektromotor 10 mit einem stirnseitigen Flansch 12, an dem ein Getriebegehäuse 26 eines zum Elektromotor 10 zugehörigen Getriebes 20 befestigt ist. Der Elektromotor 10 treibt eine Antriebswelle 14 an, an deren freien Endabschnitt eine Schnecke 22 des Getriebes 20 vorgesehen ist. Die Schnecke 22 treibt über eine Verzahnung ein im Getriebegehäuse 26 gelagertes Schneckenrad 24 an. Um einen exakten Achsabstand a zwischen der Antriebswelle 14 der Schnecke 22 und einer Abtriebswelle 28 des Schneckenrads 24 einstellen zu können, ist die Abriebswelle 28 in einer Exzenterbuchse 30 gelagert, die in eine Montagebohrung 27 des Getriebegehäuses 26 eingepresst ist. Die Montagebohrung 27 kann einen konstanten Durchmesser besitzen (Fig. 2) oder gestuft (Fig. 3) ausgeführt sein.

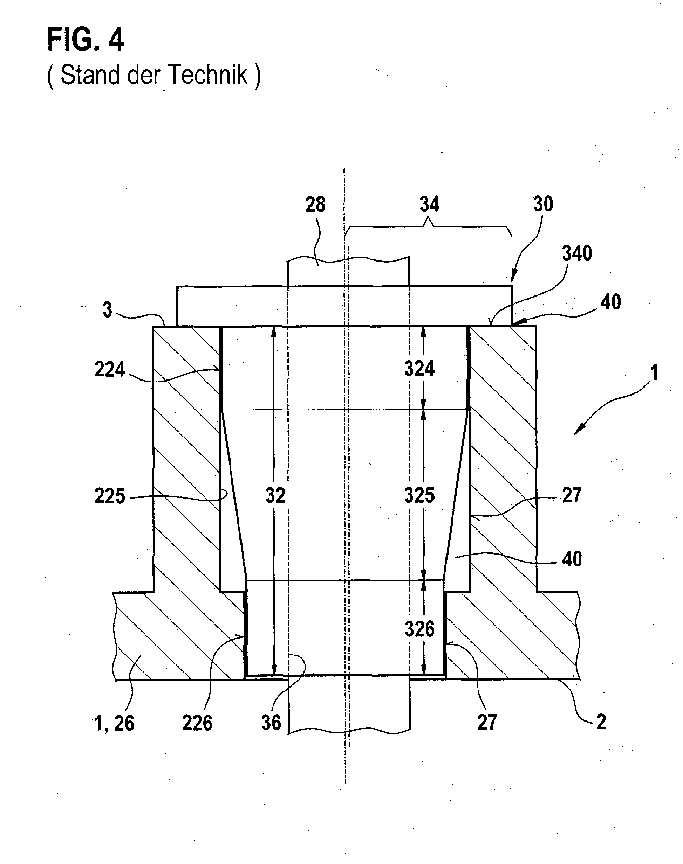

Fig. 4 zeigt eine Exzenterbuchse 30 gemäß dem Stand der Technik für eine gestufte Montagebohrung 27. Die Exzenterbuchse 30 weist einen radialen Flanschabschnitt 34 und einen damit stofflich einstückig ausgebildeten axialen Montageabschnitt 32 auf. In der Montageposition sitzt der Flanschabschnitt 34 mit einem Bund 340 an einem äußeren Rand der Montagebohrung 27 an. Der Bund 340 ist dabei eine dem Montageabschnitt 32 zugewandte Außenseite (340) einer Außenseite 320 des Flanschabschnitts 34. Der Montageabschnitt weist im Wesentlichen drei Längsbereiche 324, 325, 326 auf, wobei sich direkt an den Flanschabschnitt 34 ein erster hohlzylindrischer Pressbereich 324 anschließt. An diesen ersten Pressbereich 324 schließt sich ein bevorzugt konischer Zwischenbereich 325 an, der schließlich an einem freien Längsendabschnitt des Montageabschnitts 32 in einen zweiten hohlzylindrischen Pressbereich 326 übergeht, dessen Außendurchmesser geringer als der Außendurchmesser des ersten Pressbereichs 324 ist. Ferner weist die Exzenterbuchse 30 eine exzentrische Bohrung 36 auf, die innen ein Wälzlager, z. B. aus Kunststoff, aufweisen kann.

Die Montagebohrung 27 im Getriebegehäuse 26 ist dazu im Wesentlichen komplementär ausgebildet, wobei die Montagebohrung 27 korrespondierend zum ersten Pressbereich 324 der Exzenterbuchse 30 einen Pressbereich 224 aufweist, dessen Innendurchmesser geringfügig größer als der Außendurchmesser des ersten Pressbereichs 324 der Exzenterbuchse 30 ist. Ebenso ist zum zweiten Pressbereich 326 der Exzenterbuchse 30 ein Pressbereich 226 im Getriebegehäuse 26 vorgesehen, dessen Innendurchmesser ebenfalls geringfügig größer als der Außendurchmesser des zweiten Pressbereichs 326 der Exzenterbuchse 30 ist. Wird die Exzenterbuchse 30 in die Montagebohrung 27 eingepresst, so entstehen zwischen den jeweiligen Pressbereichen 224, 324; 226, 326 Presspassungen, die bevorzugt fluiddicht sind.

Beim Einpressen einer solchen Exzenterbuchse 30 wird eine, in einem zwischen der Exzenterbuchse 30 und der Montagebohrung 27 ausgebildeten Raum 40 eingeschlossene Luft - Fluid - komprimiert, was dem Einpressvorgang eine nicht unerheblichre Gegenkraft aufprägen kann, sodass der Einpressvorgang zumindest erschwert ist oder nicht bis zum Anschlag des Bunds 340 am Getriebegehäuse 26 durchgeführt werden kann. Ferner können später sich im Bundbereich Kapillare ausbilden, die Wasser- Fluid - nach innen zum Montageabschnitt 32 fördern, das von dort in die Montagebohrung 27 gelangen kann bzw. von einem aufgrund eines Temperaturabfalls entstehendem Unterdruck im Raum 40, in diesen hineingesaugt werden kann.

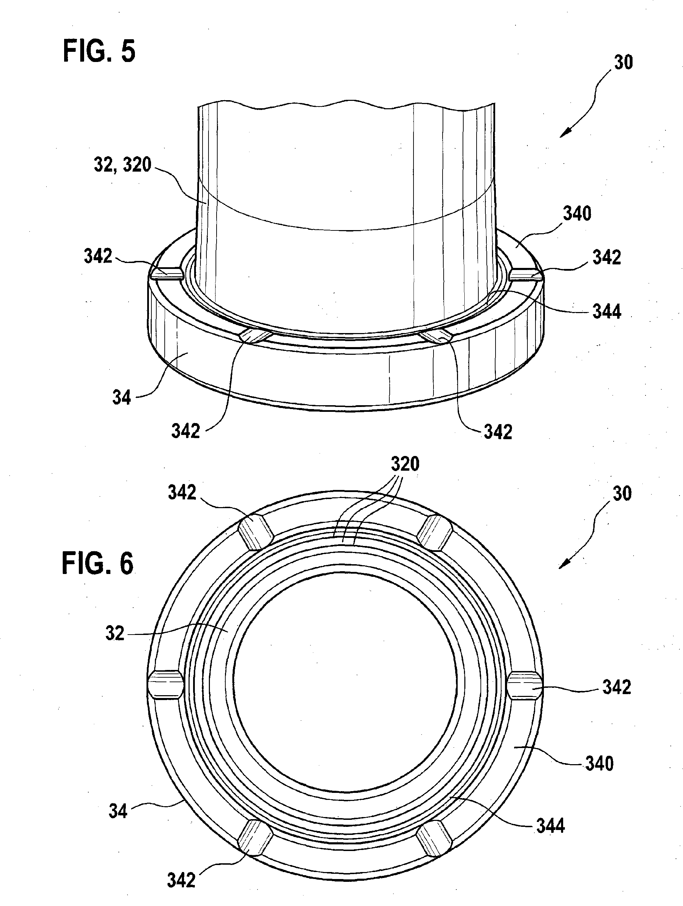

Die Fig. 5 und 6 zeigen die erste Ausführungsform der Erfindung, um dem letztgenannten Problem der Kapillarwirkung im Bundbereich zu begegnen. Im Bund 340 wird gemäß der Erfindung wenigstens ein Entlastungskanal 342, bevorzugt jedoch eine Mehrzahl von Entlastungskanälen 342, vorgesehen. Diese Entlastungskanäle 342 können z. B. als eine Nut oder eine Einprägung ausgebildet sein. Hierbei fungiert ein solcher Entlastungskanal 342 als ein Kapillare-Entlastungskanal 342. Bevorzugt ist innen an einem Übergangsbereich vom Flanschabschnitt 34 zum Montageabschnitt 32 ein Ringkanal 344 im Flanschabschnitt 34 und/oder im Montageabschnitt 32 vorgesehen, in welchem sich Wasser sammeln kann und von dort in den im Wesentlichen radial verlaufenden Entlastungskanal 342 strömen kann.

Beide Ausführungsformen der Erfindung sind auch auf nicht gestufte Buchsen 30 bzw. nicht gestufte Exzenterbuchsen 30 übertragbar.

## Patentansprüche

1. Buchse für eine Antriebseinheit (1), insbesondere Exzenterbuchse (30) für einen Wischerantrieb (1) eines Scheibenwischers, mit einem axialen Montageabschnitt (32) und einem davon abstehenden radialen Flanschabschnitt (34), wobei die Buchse (30) mit dem Montageabschnitt (32) und mit dem Flanschabschnitt (34) in/an einem Bauteil (1) montierbar ist, und
die Buchse (30) einen Entlastungskanal (342) derart aufweist, dass ein Fluid bei einer Montage der Buchse (30) im/am Bauteil (1) und/oder in einem Montagezustand im/am Bauteil (1) durch den Entlastungskanal (342) hindurch strömbar ist, **dadurch gekennzeichnet, dass**
der Entlastungskanal (342) in einem dem Montageabschnitt (32) zugewandten Bund (340) des Flanschabschnitts (34) vorgesehen ist, und im Bund (340) oder im an den Bund (340) angrenzenden Montageabschnitt (32) ein Ringkanal (344) vorgesehen ist, der mit dem Entlastungskanal (342) in einer Fluidverbindung steht.

2. Buchse gemäß Anspruch 1, wobei mittels des Entlastungskanals (342) bei und/oder nach der Montage der Buchse (30) im Bauteil (1) eine Fluidverbindung zwischen zwei Räumen herstellbar ist, wobei
der erste Raum (40) zwischen der Buchse (30) und dem Bauteil (1), und der zweite Raum (42) entweder an eine Innenseite (2) des Bauteils (1) oder an eine Außenseite (3) des Bauteils (1), insbesondere eine Umgebung (3), angrenzt.

3. Buchse gemäß einem der Anspruch 1 oder 2, wobei ferner ein Entlastungskanal (322) in einer Außenseite (320) des Montageabschnitts (32) vorgesehen ist.

4. Buchse gemäß Anspruch 3, wobei der Montageabschnitt (32) benachbart zum Flanschabschnitt (34) einen Pressbereich besitzt, wobei im Pressbereich der Entlastungskanal (322) vorgesehen ist, welcher sich über die gesamte Länge des Pressbereichs hinweg erstreckt.

5. Buchse gemäß einem der Ansprüche 1 bis 4, wobei der Entlastungskanal (322) des Montageabschnitts (32) in einem Anlagebereich, insbesondere dem Pressbereich (326), des Montageabschnitts (32) mit dem Bauteil (1) vorgesehen ist, und der Entlastungskanal (322) bevorzugt im Wesentlichen parallel zur Längsrichtung des Montageabschnitts (32) verläuft.

6. Buchse gemäß einem der Ansprüche 1 bis 5, wobei der Montageabschnitt (32) benachbart zum Flanschabschnitt (34) einen ersten Pressbereich (324) und an seinem freien Längsendabschnitt einen zweiten Pressbereich (326) besitzt, der einen geringeren Durchmesser als der erste Pressbereich (324) aufweist, wobei im zweiten Pressbereich (326) bevorzugt drei Entlastungskanäle (322) vorgesehen sind, die sich über die gesamte Länge des zweiten Pressbereichs (326) hinweg erstrecken.

7. Buchse gemäß einem der Ansprüche 1 bis 6, wobei der Entlastungskanal (342) des Flanschabschnitts (34) ein Kapillare-Entlastungskanal (342) ist, durch welchen im Montagezustand der Buchse (30) am/im Bauteil (1) eine Kapillare zwischen dem Bund (340) der Buchse (30) und dem Bauteil (1) entwässerbar ist.

8. Buchse gemäß einem der Ansprüche 1 bis 7, wobei der Entlastungskanal (322) des Montageabschnitts (32) ein im Wesentlichen axialer Druckentlastungskanal (322) ist, der bei der Montage der Buchse (30) am/im Bauteil (1) den ersten Raum (40) zwischen der Buchse (30) und dem Bauteil (1) entlüftet.

9. Buchse gemäß einem der Ansprüche 1 bis 8, wobei der Entlastungskanal (322, 342) eine aus dem Material der Buchse (30) herausgearbeitete Nut (322, 342) oder eine in das Material der Buchse (30) eingebrachte Vertiefung (322, 342) ist.

10. Antriebseinheit, insbesondere Wischerantrieb (1) für einen Scheibenwischer eines Kraftfahrzeugs, mit einer Buchse (30), insbesondere einer Exzenterbuchse (30), nach einem der Ansprüche 1 bis 9.

## Claims

1. Bushing for a drive unit (1), in particular eccentric bushing (30) for a wiper drive (1) of a windscreen wiper, with an axial mounting section (32) and a radial flange section (34) protruding therefrom, wherein the bushing (30) can be mounted in/on a component (1) by means of the mounting section (32) and by means of the flange section (34), and the bushing (30) has a relief channel (342) in such a manner that, when the bushing (30) is mounted in/on the component (1) and/or in a mounted state in/on the component (1), a fluid is flowable through the relief channel (342), **characterized in that** the relief channel (342) is provided in a collar (340) of the flange section (34), which collar (340) faces the mounting section (32), and an annular channel (344) which is fluidically connected to the relief channel (342) is provided in the collar (340) or in the mounting section (32) adjacent to the collar (340).

2. Bushing according to Claim 1, wherein, when and/or after the bushing (30) is mounted in the component (1), a fluid connection can be produced between two spaces by means of the relief channel (342), wherein the first space (40) is located between the bushing (30) and the component (1), and the second space (42) is either adjacent to an inner side (2) of the component (1) or to an outer side (3) of the component (1), in particular an environment (3).

3. Bushing according to either of Claim 1 or 2, wherein, furthermore, a relief channel (322) is provided in an outer side (320) of the mounting section (32).

4. Bushing according to Claim 3, wherein the mounting section (32) has a pressing region adjacent to the flange section (34), wherein the relief channel (322) which extends beyond the entire length of the pressing region is provided in the pressing region.

5. Bushing according to one of Claims 1 to 4, wherein the relief channel (322) of the mounting section (32) is provided in a contact region, in particular the pressing region (326), of the mounting section (32) with the component (1), and the relief channel (322) preferably runs substantially parallel to the longitudinal direction of the mounting section (42).

6. Bushing according to one of Claims 1 to 5, wherein the mounting section (32) has a first pressing region (324) adjacent to the flange section (34) and has, on the free longitudinal end section thereof, a second pressing region (326) which has a smaller diameter than the first pressing region (324), wherein three relief channels (322) which extend beyond the entire length of the second pressing region (326) are preferably provided in the second pressing region (326).

7. Bushing according to one of Claims 1 to 6, wherein the relief channel (342) of the flange section (34) is a capillary relief channel (342) through which, in the mounted state of the bushing (30) on/in the component (1), a capillary between the collar (340) of the bushing (30) and the component (1) can be drained.

8. Bushing according to one of Claims 1 to 7, wherein the relief channel (322) of the mounting section (32) is a substantially axial pressure relief channel (322) which, when the bushing (30) is mounted on/in the component (1), vents the first space (40) between the bushing (30) and the component (1).

9. Bushing according to one of Claims 1 to 8, wherein the relief channel (322, 342) is a groove (322, 342) machined from the material of the bushing (30) or a depression (322, 342) introduced into the material of the bushing (30).

10. Drive unit, in particular wiper drive (1) for a windscreen wiper of a motor vehicle, with a bushing (30), in particular an eccentric bushing (30), according to one of Claims 1 to 9.

## Revendications

1. Douille pour une unité d'entraînement (1), en particulier douille excentrique (30) pour un entraînement d'essuie-glace (1) d'un essuie-glace, comprenant une portion de montage axiale (32) et une portion de bride radiale (34) faisant saillie à partir de celle-ci, la douille (30) pouvant être montée à l'aide de la portion de montage (32) et à l'aide de la portion de bride (34) dans/sur un composant (1), et
la douille (30) comprenant un canal de détente (342), de telle sorte qu'un fluide puisse s'écouler à travers le canal de détente (342) lors d'un montage de la douille (30) dans/sur le composant (1) et/ou dans un état de montage dans/sur le composant (1), **caractérisée en ce que** le canal de détente (342) est prévu dans une collerette (340), tournée vers la portion de montage (32), de la portion de bride (34), et un canal annulaire (344) est prévu dans la collerette (340) ou dans la portion de montage (32) adjacente à la collerette (340), lequel canal annulaire est en liaison fluidique avec le canal de détente (342) .

2. Douille selon la revendication 1, une liaison fluidique entre deux espaces pouvant être réalisée au moyen du canal de détente (342) lors du et/ou après le montage de la douille (30) dans le composant (1),
le premier espace (40) se trouvant entre la douille (30) et le composant (1), et le deuxième espace (42) soit sur un côté intérieur (2) du composant (1) soit sur un côté extérieur (3) du composant (1) étant adjacents en particulier à un environnement (3).

3. Douille selon l'une quelconque des revendications 1 ou 2, un canal de détente (322) étant en outre prévu dans un côté extérieur (320) de la portion de montage (32).

4. Douille selon la revendication 3, la portion de montage (32) comportant, de manière adjacente à la portion de bride (34), une région de pressage, le canal de détente (322) étant prévu dans la région de pressage, lequel s'étend sur toute la longueur de la région de pressage.

5. Douille selon l'une quelconque des revendications 1 à 4, le canal de détente (322) de la portion de montage (32) étant prévu avec le composant (1) dans une région d'appui, en particulier la région de pressage (326), de la portion de montage (32), et le canal de détente (322) s'étendant de préférence essentiellement parallèlement à la direction longitudinale de la portion de montage (32) .

6. Douille selon l'une quelconque des revendications 1 à 5, la portion de montage (32) comportant, de manière adjacente à la portion de bride (34), une première région de pressage (324) et, au niveau de sa portion d'extrémité longitudinale libre, une deuxième région de pressage (326) qui présente un plus petit diamètre que la première région de pressage (324), de préférence trois canaux de détente (322) étant prévus dans la deuxième région de pressage (326), lesquels s'étendent sur toute la longueur de la deuxième région de pressage (326).

7. Douille selon l'une quelconque des revendications 1 à 6, le canal de détente (342) de la portion de bride (34) étant un canal de détente capillaire (342), au moyen duquel, à l'état de montage de la douille (30) sur/dans le composant (1), un tube capillaire entre la collerette (340) de la douille (30) et le composant (1) peut être drainé.

8. Douille selon l'une quelconque des revendications 1 à 7, le canal de détente (322) de la portion de montage (32) étant un canal de détente de pression (322) essentiellement axial, lequel, lors du montage de la douille (30) sur/dans le composant (1), purge le premier espace (40) entre la douille (30) et le composant (1).

9. Douille selon l'une quelconque des revendications 1 à 8, le canal de détente (322, 342) étant une rainure (322, 342) dégagée dans le matériau de la douille (30) ou un évidement (322, 342) ménagé dans le matériau de la douille (30).

10. Unité d'entraînement, en particulier entraînement d'essuie-glace (1) pour un essuie-glace d'un véhicule automobile, comprenant une douille (30), en particulier une douille excentrique (30), selon l'une quelconque des revendications 1 à 9.
